## Europäisches Patentamt

## European Patent Office

## Office européen des brevets

(11) Publication number: **0 337 622**
**A1**

(12) ## EUROPEAN PATENT APPLICATION

(21) Application number: 89302890.2

(51) Int. Cl.⁴: **H04L 11/16**

(22) Date of filing: 22.03.89

(30) Priority: 13.04.88 GB 8808667

(43) Date of publication of application:
**18.10.89 Bulletin 89/42**

(84) Designated Contracting States:
**BE DE ES FR GR IT LU NL SE**

(71) Applicant: **GEC PLESSEY**
**TELECOMMUNICATIONS LIMITED**
**P.O. Box 53 Telephone Road**
**Coventry, CV3 1HJ(GB)**

(72) Inventor: **Fisher, Dennis**
**12 Nightingale Drive**
**Tipton. DY4 7QL(GB)**
Inventor: **Lumb, Anthony Peter**
**63 Merlin Avenue**
**Nuneaton. CV10 9JY(GB)**

(74) Representative: **MacKenzie, Ian Alastair**
**Robert**
**The General Electric Company, p.l.c. Central**
**Patent Department Wembley Office Hirst**
**Research Center East Lane**
**Wembley Middlesex HA9 7PP(GB)**

(54) **Ring data network.**

(57) The invention concerns a contra-rotating ring data communications network interconnecting a plurality of terminals (20, 21, 22), the network having primary and secondary data paths (10, 11). During normal operation the primary data path (10) and the secondary data path (11) are interconnected at one terminal in such a manner that the contra-rotating ring (10, 11) becomes a single ring with data travelling in both paths. The primary and secondary data paths (10, 11) are preferably optical fibres. Each terminal may include two media access controllers each associated with a pair of encoder/decoder circuits. In such a case the ring is twisted into the form of a Mobious loop (37) so that the two media access controllers of each terminal are located topologically as far apart in the ring as is possible.

Fig.3.

STATION 1   STATION 2   STATION 3
RING WITH STATION 2 INTERNALY LOOPED

# RING DATA NETWORK

The present invention concerns Data Communication Systems and in particular systems in which a plurality of terminals or nodes interconnected in the form of a ring in which data can be passed from any one station in the ring to any other station.

In order to guard against failure of the ring should a single link in the ring be broken it is common to have two circular communication paths along which the data is sent in opposite directions. This is known as a contra-rotating ring.

The ring topology is particularly suited to the transmission of data by optical fibre. In a conventional optical ring system each station communicates with the primary optic fibre data path via what is known as a Media Access Controller. However the present invention is not limited solely to optical rings.

One of the problems encountered with a contra-rotating ring system is that of checking the secondary or reverse channel, normally referred to as routining. To routine the secondary channel whilst running the primary channel without interruption requires a second Media Access Controller at each station just to send and receive messages on the ring.

This is an expensive solution. The present invention has for an object to provide a ring data network in which an additional Media Access Controller is not required.

Accordingly the present invention consists in a contra rotating ring data communications network interconnecting a plurality of terminals, the network having primary and secondary data paths, and wherein at one terminal the primary data path and the secondary data path are connected to one another, in such a manner that the contra-rotating ring becomes a single ring with data travelling in both paths.

In order that the present invention may be more readily understood an embodiment thereof will now be described by way of example and with reference to the accompanying drawings in which:

Figure 1 is a block diagram of a single station or node on a contra-rotating optical fibre ring network,

Figure 2 is a block diagram showing three stations, one of which is in a fault condition,

Figure 3 shows a ring network operating in accordance with the present invention, and

Figure 4 is a block diagram of an embodiment of a system according to the present invention.

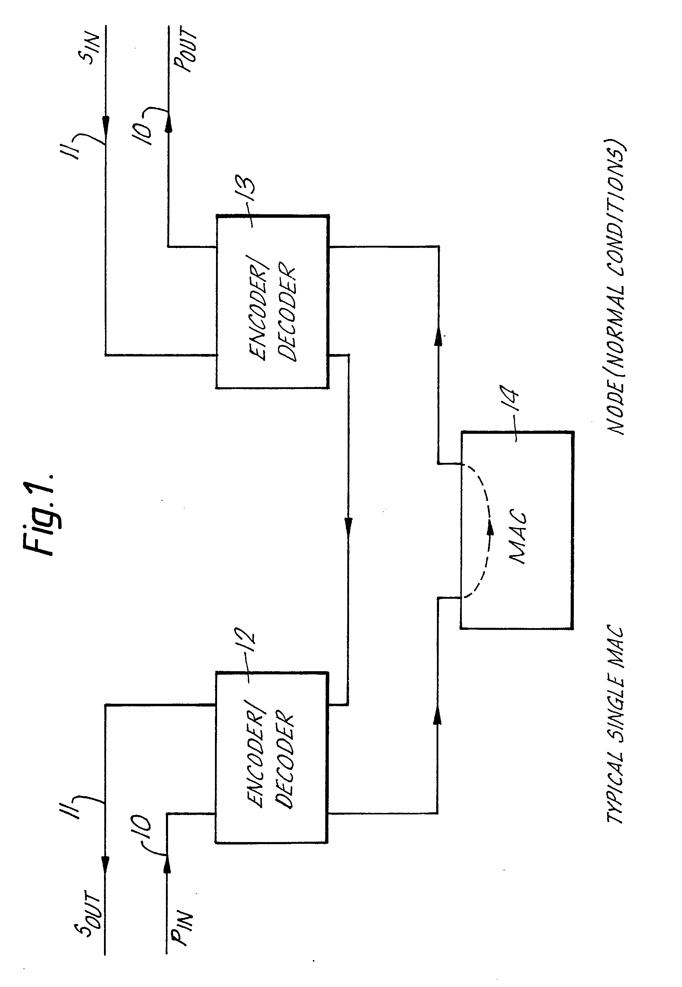

Referring now to Figure 1 of the drawings this shows a single mode or terminal which forms part of a contra-rotating optical fibre ring network. The network comprises two optical fibre paths 10, 11, around which data is circulated in directions shown by the arrows. Each terminal also includes a pair of encoder/decoders 12 and 13 and a Media Access Controller 14 (MAC) connected in the primary data ring 10.

It is via the MAC that any peripheral equipment associated with the terminal sends and receives messages onto the primary ring 10.

It will be appreciated that if it is required to routine or test the secondary ring 11 without intercepting the primary then a second MAC is required for the terminal to access the secondary ring. The arrangement shown in Figure 1 is entirely conventional.

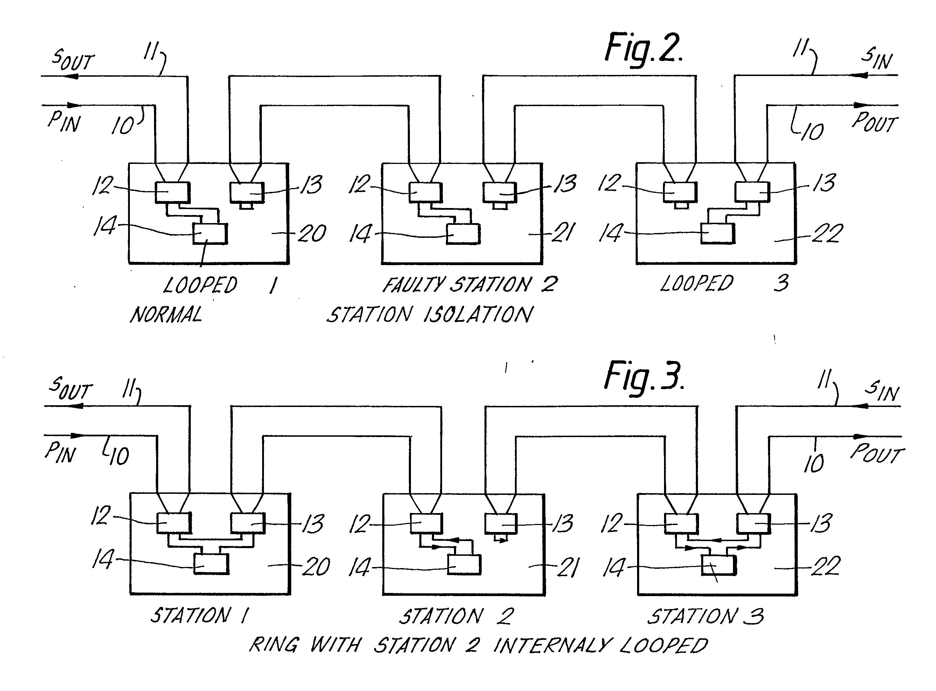

Referring now to Figure 2 of the drawings this shows three terminals or nodes 20, 21 and 22 connected in a contra-rotating optical ring. Elements common to Figure 1 have been given the same reference numerals. This figure shows the situation that occurs when terminal 21 has developed a fault and has to be removed from the network. From this figure it can be seen that the internal connections in terminal 20 have been altered so that the MAC 14 of this terminal only co-operates with the encoder/decoder 12. Thus data enters encoder/decoder 12 on the primary ring 10, can be accessed or received by the MAC 14 and travels outwardly on the secondary ring 11. Similarly at station 22 the internal connections have been switched so that MAC 14 only communicates with encoder/decoder 13. The result again is that data enters the terminal via the secondary ring 11 and leaves the terminal via the primary ring 10. It can be appreciated that what once was a pair of separate optical rings has been converted into a single ring with terminal 21 eliminated from it, the signal paths being looped back at stations 20 and 22. This is the situation that occurs when a faulty terminal has to be isolated in a conventional contra-rotating optical ring.

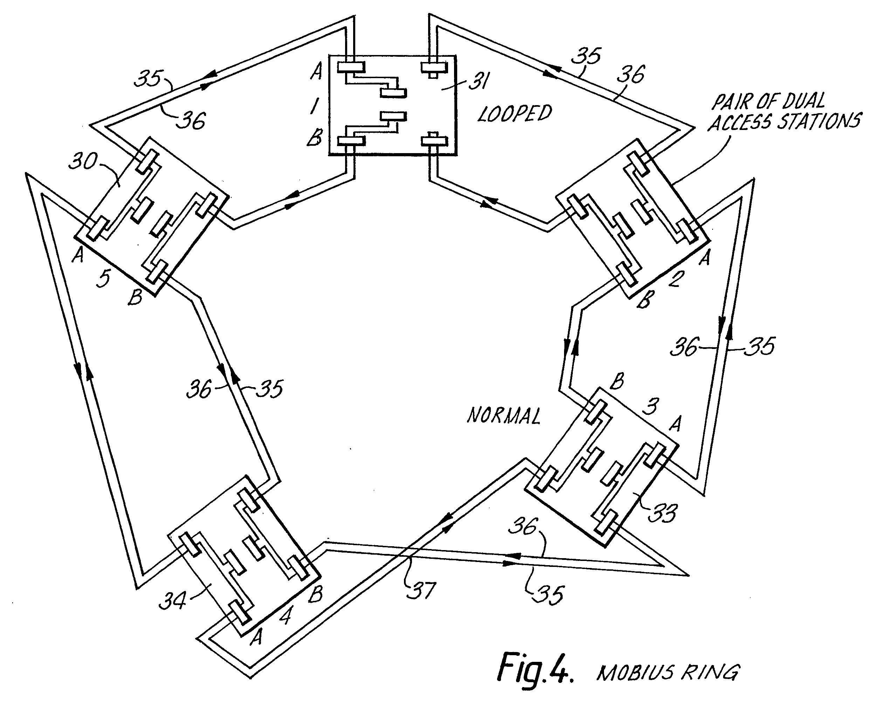

In accordance with the present invention a contra-rotating ring network is run in normal operation with one terminal in its permanently looped form. This is the configuration shown in Figure 3. In this Figure terminal 21 is internally looped in a manner similar to that of terminal 22 in Figure 2. However there is no other internal looping so that no terminal is isolated. The configuration shown in Figure 3 means that both the primary and secondary data paths 10 and 11 are in continuous use so that there is no need for additional routining. Should a fault occur then the location of that fault can be isolated in the manner described in Figure 2. During normal operation the terminals at which the loop-back is performed are rotated so that each terminal in turn acts as the loop-back point. Figure 4 of the drawing shows a still more sophisticated version. To still further improve the ability of a ring network to survive failures it has been proposed to provide each terminal or node with two access stations each capable of independently accessing the ring network. The access stations of a single terminal are located on the ring so as topologically to be as far apart as possible. The ring is twisted to form a Mobius loop so that the topologically space stations belonging to a single terminal are physically located close to one another. This is the arrangement shown in Figure 4. A complete ring is shown with five terminals or nodes 30, 31, 32, 33 and 34. These are interconnected by a primary ring path 35 and a secondary path 36. The directions in which data travels is shown by the arrow in the drawing. It can be seen that the primary and secondary paths cross at 37 to give Mobius topology.

Each of the terminals has two access stations A and B with each station having the same configuration as the terminals shown in Figures 1, 2 and 3, namely a Media Access Controller and two encoder/decoder circuits. Such an arrangement gives excellent reliability as it is tolerant to double failures of terminals and is even tolerant to approximately 75% of triple failures. It will be appreciated that such rings may have up to 100 terminals or nodes so that their ability to tolerate mult iple failures is of considerable importance. In the embodiment shown in Figure 4 it will be seen that terminal 31 has both of its access stations in the loop-back mode. This creates two separate rings, namely one ring including stations 30A, 31A, 32A, 33B, 34B and 30B, and the other including stations 30Bm 31B, 32Bm, 33A, 34A and 30A. These rings can isolate any single fault and remain as two rings. Any double fault can be isolated by reforming the two rings. As in the previous embodiment the terminal in the loop-back mode is changed at periodic intervals.

One advantage of the arrangement just described is that in normal operation the available bandwidth is doubled.

## Claims

A contra-rotating ring data communications network interconnecting a plurality of terminals, (20, 21, 22), the network having primary and secondary data paths (10, 11), and characterised in that at one terminal the primary data path (10) and the secondary data path (11) are interconnected in such a manner that in normal operation the contra-rotating ring (10, 11) becomes a single ring with data travelling in both paths.

2. A data communications network as claimed in Claim 1, and further characterised in that the primary and secondary data paths (10, 11) are optical fibres.

3. A data communications network as claimed in Claim 2, and further characterised in that each terminal (20, 21, 22) includes a pair of encoder/decoders (12, 13) each coupled to one of the data paths (10, 11) and a Media Access Controller (14) connected to the primary data path (10).

4. A data communications network as claimed in Claim 3, and further characterised in that in normal operation the media access controller (14) in one terminal (21) is connected to one encoder/decoder (12) so as to be capable of sending data on the primary data path (10) and receiving data from the secondary data path (11), and the other encoder/decoder (13) is arranged to couple the primary data path (10) to the second data path (11).

5. A data communications network as claimed in any one of the preceding claims and further characterised in that each terminal (30, 31, 32, 33, 34) includes two media access controllers each associated with a pair of encoder/decoder circuits, and wherein the ring is twisted into the form of a Mobious loop (37) so that the two media access controllers of each terminal are located topologically in the ring as far apart as is possible.

# Fig.1.

TYPICAL SINGLE MAC    NODE(NORMAL CONDITIONS)

Fig.2.

$S_{OUT}$ · 11 · $S_{IN}$
$P_{IN}$ · 10 · 10 · $P_{OUT}$

12 · 13
14 · 20

LOOPED 1
NORMAL

12 · 13
14 · 21

FAULTY STATION 2
STATION ISOLATION

12 · 13
14 · 22

LOOPED 3

Fig.3.

$S_{OUT}$ · 11 · $S_{IN}$
$P_{IN}$ · 10 · 10 · $P_{OUT}$

12 · 13
14 · 20

STATION 1

12 · 13
14 · 21

STATION 2

12 · 13
14 · 22

STATION 3

RING WITH STATION 2 INTERNALY LOOPED

EP 0 337 622 A1

Fig.4. MOBIUS RING

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | EP-A-0 086 577 (RACAL-MILGO) * Abstract; page 4, lines 1-9; page 4, line 36 - page 5, line 1; figures 3,5 * | 1,2 | H 04 L 11/16 |
| Y | | 3-5 | |
| | --- | | |
| P,Y | EP-A-0 295 927 (GEC PLESSEY) * Whole document * | 3-5 | |
| | ----- | | |
| | | | TECHNICAL FIELDS SEARCHED (Int. Cl.4) |
| | | | H 04 L |

The present search report has been drawn up for all claims

| Place of search | Date of completion of the search | Examiner |
|---|---|---|
| THE HAGUE | 21-07-1989 | MIKKELSEN C. |

EPO FORM 1503 03.82 (P0401)